# EUROPEAN PATENT APPLICATION

(11) **EP 4 563 889 A1**
(43) Date of publication of application: **04.06.2025**
(21) Application number: 24210755.5
(22) Date of filing: 05.11.2024
(51) Int. Cl.: F23R 3/10, F23R 3/50

(54) **COMBUSTION EQUIPMENT FOR A GAS TURBINE ENGINE**

(30) Priority: 30.11.2023 GB 202318297
(71) Applicant: Rolls-Royce plc, London N1 9FX (GB)
(72) Inventor: Shahpar, Shahrokh, Derby, DE24 8BJ (GB); Kannan, Karpaga Vipran, Derby, DE24 8BJ (GB)
(74) Representative: Rolls-Royce plc

(57) **Abstract**

The present disclosure relates to combustion equipment 16 for a gas turbine engine 1, including an annular cowl 500 positioned upstream of a head plate 328. In a longitudinal plane which includes a central axis and which lies at an azimuthal location between adjacent fuel injectors of the combustion equipment 16, the annular cowl has a profile which extends along a local cowl axis, and which is non-symmetric with respect to the local cowl axis.

## Description

### TECHNICAL FIELD

The disclosure relates to combustion equipment for a gas turbine engine, and in particular relates to the configuration of an annular cowl for a combustion chamber.

### BACKGROUND

A known arrangement for combustion equipment of a gas turbine includes an annular combustion chamber delimited at an upstream end by a head plate, with a fuel injection nozzle extending through the head plate. It is known to provide a cowl upstream of the headplate (with respect to an axial flow path through the gas turbine engine and through the combustor), to direct a flow of primary air received from an upstream compressor around the combustion chamber for ingestion at downstream ports of the combustion chamber (i.e., downstream of the head plate).

EP 3076079 B1 discloses combustion equipment in which there is an annular cowl having an upstream end (e.g., tip) which extends upstream of a fuel injector arm of a fuel injector, to enclose an atomizing body of the fuel injector. Accordingly, primary air received from a compressor extends around the cowl and not to the fuel injector. The fuel injector may be a pressure atomizing fuel injector.

It is also known to provide a fuel injector having an air inlet for primary air, such as an air blast type fuel injector. In such arrangements, an annular cowl has upstream openings for the air inlet of the air of the fuel injector. Considering a cross-sectional profile of the cowl, it is known to provide these openings at a location corresponding to the upstream end (e.g., tip) of the cowl profile.

It is desirable to provide improvements in the aerodynamic design of a cowl geometry, including for fuel injectors having an air inlet for primary air (such as an air blast type fuel injector).

### SUMMARY

According to a first aspect there is provided combustion equipment for a gas turbine engine, comprising: an annular combustion chamber having a head plate at an upstream end, wherein the combustion chamber is annular around a central axis; a plurality of fuel injectors angularly distributed around the combustion chamber, each fuel injector having a respective air inlet defining an air inlet axis; an annular cowl positioned upstream of the head plate, the annular cowl extending from a downstream base proximal to the head plate to an upstream tip; wherein, in a radial plane intersecting the central axis and at an angular location between adjacent fuel injectors, the annular cowl has a cowl profile which extends along a local cowl axis from the base towards the tip. The local cowl axis may be: normal to a midpoint on the head plate in the radial plane, or coincident with an angular projection of an air inlet axis of an adjacent fuel injector to the radial plane. The cowl profile in the radial plane is non-symmetric with respect to the local cowl axis.

It may be that in the radial plane the cowl profile has a local height along a direction normal to the local cowl axis, wherein the local height varies along the local cowl axis from the tip to the base, increasing from a minimum at a tip point. It may be that a tip portion of the cowl profile extends from the tip point to an axial location corresponding to 50% of a maximum local height of the cowl profile. It may be that the cowl profile in the radial plane is non-symmetric with respect to the local cowl axis within the tip region.

It may be that in the radial plane the cowl profile has a local height along a direction normal to the local cowl axis, wherein the local height varies along the local cowl axis from the tip to the base, increasing from a minimum at a tip point. It may be that the air inlets of the plurality of fuel injectors each have a centre at a radial location with respect to the central axis, defined as an air inlet radial location. It may be that the tip point is offset from the air inlet radial location by a radial offset with respect to the central axis which is greater than 10% of the maximum local height of the cowl profile.

It may be that the air inlets of the plurality of fuel injectors each have a centre at a radial location with respect to the central axis, defined as an air inlet radial location. It may be that in the radial plane the cowl profile has a non-uniform radius of curvature, and a point of minimum radius of curvature or a locus of points of common minimum radius of curvature is offset from the air inlet radial location by a radial offset with respect to the central axis which is greater than 10% of a maximum radial separation between points on the cowl profile.

It may be that in the radial plane, the local cowl axis intersects the head plate at an origin; wherein in the radial plane the cowl profile has a non-uniform radius of curvature, and includes a point of minimum curvature or a locus of points of common minimum curvature. It may be that in a polar frame of reference about the origin and in which the local cowl axis extends from the origin at an angle of 0° the point of minimum curvature or locus of points of common minimum curvature are angularly offset from the local cowl axis by at least 15°.

It may be that in the radial plane the cowl profile is defined by two curved halves that meet towards the tip; wherein a first of the curved halves has a point of inflection.

It may be that a second of the curved halves has no point of inflection.

It may be that in the radial plane the cowl profile is defined by two curved halves that meet towards the tip; including a curved half with an ogee profile and a curved half with an ogive profile.

It may be that, for each fuel injector: the cowl comprises a recess projecting inwardly towards the head plate, wherein the respective fuel injector extends through the recess and has a supporting fuel injector arm extending radially inwardly towards the recess so as to protrude upstream of the cowl within the recess at a radial location radially outward of the respective air inlet, defined as an embedded arm radial location. In the radial plane, the cowl profile may be generally convex and has a concave region at a radial location corresponding to the embedded arm radial location. The radial plane may be at an angular location between adjacent recesses of the cowl.

It may be that, in the radial plane, the cowl profile has a point of inflection at a radial location corresponding to the embedded arm radial location.

It may be that, for each of the fuel injectors, a wall defining the respective air inlet is non-symmetrically tapered to bias flow around the wall towards a radially inward direction, or towards a radially outward direction.

It may be that the non-symmetrical taper is defined by a truncation of the wall along a plane that is inclined with respect to the air inlet axis and a normal of the air inlet axis.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein.

According to an aspect, there is provided a method of operating an aircraft comprising a gas turbine engine as described and/or claimed herein.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments are described below by way of example only with reference to the accompanying drawings, which are purely schematic and not to scale, and in which:
- **Figure 1**: is a sectional side view of a gas turbine engine;
- **Figure 2**: schematically shows a partial view of annular combustion equipment, normal to a rotational axis of a gas turbine engine;
- **Figure 3**: schematically shows example combustion equipment, along a radial axis intersecting the rotational axis of a gas turbine engine; and
- **Figures 4-7**: schematically show example cowl profiles for an annular cowl for combustion equipment.

### DETAILED DESCRIPTION

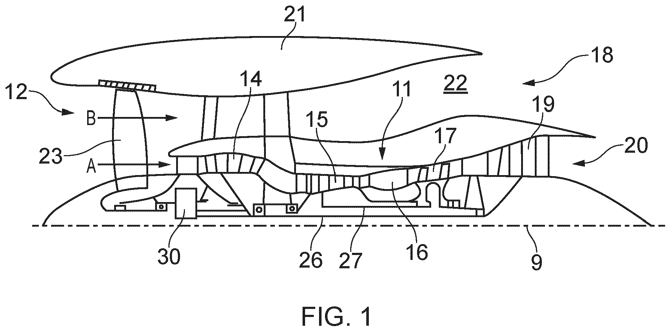

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high pressure and low-pressure turbines 17, 19 before being exhausted through the nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. In other examples, such engines may have a radial intake and/or a radial exhaust; i.e., a stationary gas turbine engine. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

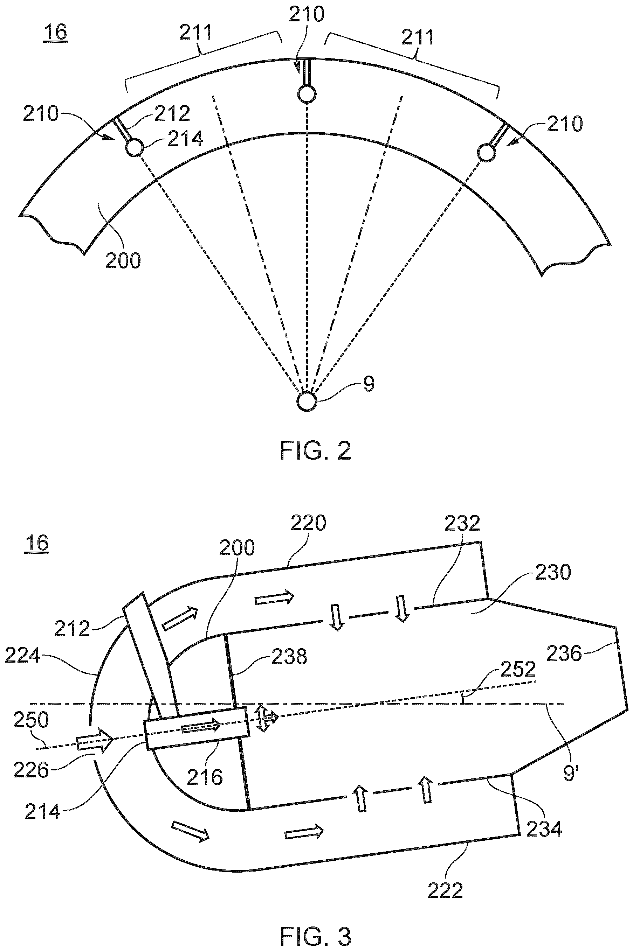

**Figure 2** schematically shows a partial view of combustion equipment 16, such as combustion equipment 16 of the example gas turbine engine 1 of Figure 1, along an axial view normal to a rotational axis 9 of the gas turbine engine. References herein to the rotational axis 9 may apply to the rotational axis of a gas turbine engine in which the combustion equipment is installed, and to a corresponding axis of the combustion equipment, about which the combustion equipment is annular. Accordingly, the combustion equipment itself has such an axis, even when not installed in a gas turbine engine. The rotational axis may be referred to as a central axis.

Figure 2 shows an upstream wall of a combustion chamber as defined by an annular cowl 200, with three example fuel injector locations 210 angularly distributed around the annular cowl (with respect to the central axis 9) at equal angular intervals. At each fuel injector location 210, a fuel injector arm 214 extends radially inwardly from a radially outward location (where it couples to a fuel supply system, not shown) to intersect the cowl, as will be described and shown below. Figure 2 also shows a fuel injector air inlet 214, which is configured to receive primary air from an upstream compressor of the gas turbine engine.

Figure 2 schematically indicates angular regions 211 between fuel injector locations. Over these regions, the annular cowl may be axisymmetric with respect to the central axis 9, whereas the profile of the annular cowl may vary at the fuel injector location to accommodate the fuel injector.

**Figure 3** shows a cross-sectional view of the combustion equipment in a radial plane intersecting the central axis 9 (not shown). Figure 3 shows an axis 9' parallel to and radially offset from the central axis 9.

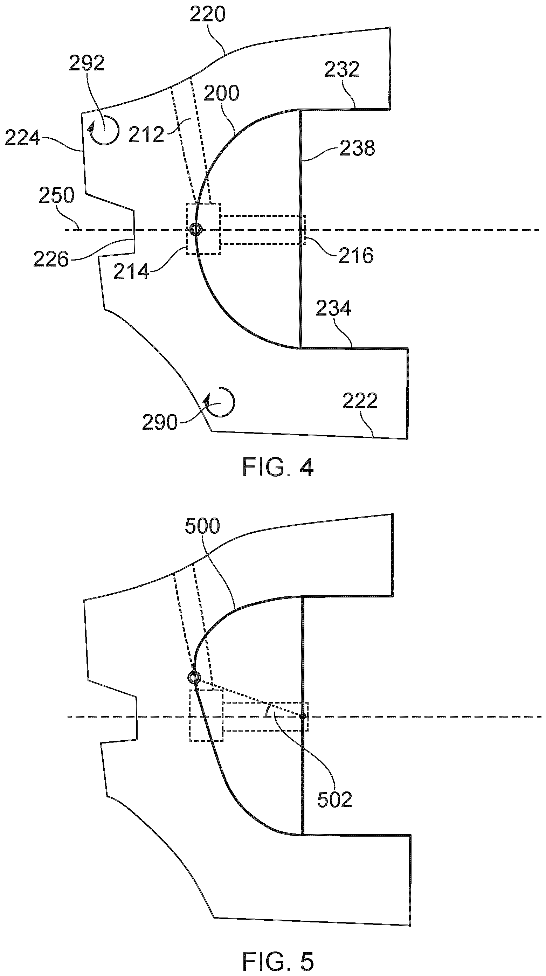

The combustion equipment 16 includes an annular casing defined by at least an annular outer casing 220 and annular inner casing 222, with an upstream wall 224 joining the outer and inner casings 220, 222. The expressions "outer" and "inner" refer to the radial positions of the casings, defining an annular volume therebetween. A pre-diffuser (not shown) is configured to deliver a flow of primary air from an upstream compressor (as described above with respect to Figure 1) into the casing, via a pre-diffuser exit 226 in the upstream wall 224. While not shown, a pre-diffuser provides a channel from a final stage of a compressor (e.g., from a high-pressure outlet guide vane, OGV) to the combustion equipment 16. Although the upstream wall 224 is schematically illustrated as a simple semi-circular arc, in practice the casing wall may have a complex form. Like what is shown in Figure 4.

Within the casing, there is an annular combustion chamber 230 defined between an annular outer liner 232, an annular inner liner 234 (which both taper towards an outlet 236, in this example), and an upstream head plate 238 (see Figure 3). As elsewhere herein, the expressions "upstream" and "downstream" as used herein refer to a generally axial direction of air flow along a core gas path through the gas turbine engine (i.e., generally parallel with the central axis 9).

The cowl 200 is provided on an upstream side of the head plate 238 (see Figure 4), extending form a downstream base (proximal to the head plate) to an upstream end (e.g., tip). The cowl 200 is configured to split a flow of primary air received from the pre-diffuser exit 226 between an outer path (generally between the outer casing 220 and the outer liner 232) and an inner path (generally between the inner casing 222 and the inner liner 234). Figure 3 shows a cross section at a radial plane that intersects a fuel injector at a fuel injector location as described above with respect to Figure 2. As shown, the fuel injector arm 212 extends radially inwardly through the space between the casing and the cowl, and extends through the cowl to support an injector nozzle 216. The injector nozzle 216 extends through the head plate 238. The injector nozzle 216 is configured to inject fuel (or an air/fuel mixture) into the combustion chamber 230 for combustion. The fuel injector also comprises an air inlet 214 (fuel injector air inlet) which is upstream of the cowl 200 and configured to receive a fuel injector portion of primary air received from the pre-diffuser exit 226.

The further discussion makes reference to a local cowl axis, which is used to define a frame of reference for describing a profile of the cowl at the fuel injector location.

The local cowl axis may be defined as (i) an axis normal to a midpoint on the on the head plate in the respective radial plane, or (ii) an axis coincident with an angular projection of an air inlet axis of an adjacent fuel injector to the radial plane.

Definition (i) is simple. In each radial plane (whether intersecting a fuel injector location 210, or a location 211 between fuel injectors), the head plate has an extent (e.g., in the form of a line or curve), and so has a midpoint along that extent. The axis normal to that midpoint (i.e., normal to the local profile of the head plate in the respective plane, at the midpoint) can therefore be found.

Definition (ii) is more complex. The air inlet axis of a fuel injector is the axis along which the fuel injector air inlet 214 is configured to receive the flow of primary air. It is therefore defined by the geometry and profile of the fuel injector air inlet 214 itself - e.g., the extent of an air ingestion flow channel of the fuel injector extending from or defined by the air inlet 214. The axis may be normal to a face of the air inlet 214, as shown in Figure 3.

In Figure 3, axes according to both definitions are coincident, but in other examples this may not be the case.

The local cowl axis is relevant because in many combustor arrangements, the cowl is not oriented to receive a directly axial flow (i.e., a flow generally parallel with the central axis). In contrast, the combustion equipment and/or cowl may be configured to receive an annular flow which is locally inclined relative to the central axis, as shown in Figure 3. For example, the combustion equipment 16 and/or cowl 200 may be configured to receive an annular flow which is local y inclined relative to the central axis by 0-15°, for example 2-10°. This angle is illustrated in Figure 3 as angle 252, which is between the local cowl axis 250 and the axis 9' parallel to the central axis.

**Figures 4 to 7** show examples of cowl geometries in radial planes between fuel injector locations, with the corresponding profile of the fuel injector shown projected into the respective plane in dashed lines. Accordingly, in the respective cross-sectional view, the fuel injector does not intersect the cowl, and the dashed profile of the fuel injector corresponds to an annular projection of the fuel injector from the fuel injector location to the respective radial plane.

Figures 4 to 7 each show a partial view of the combustion equipment which includes the cowl in context, in particular showing how the cowl blends with the profile of the outer and inner liners 232, 234, and the configuration of the cowl with respect to the opposing walls of the combustion equipment (including the upstream wall 224, and the profiles of the outer and inner casings 220, 222). The full combustion chamber is not shown, nor is the full outer and inner flow paths.

Figures 4 to 7 each show the partial view with the local cowl axis 250 horizontal in the drawing, but this does not necessarily indicate that the local cowl axis is parallel with the central axis for the combustion equipment (or associated gas turbine engine). In each of these examples, the local cowl axis is angularly offset (e.g., inclined) from the central axis, as discussed above with respect to Figure 3. However, in other examples, the local cowl axis may be parallel with the central axis.

Figures 4 to 7 corresponds to parts of a 3-D CFD (computational fluid dynamics) model used by the inventors for analysing flow dynamics in the combustion equipment, with a simulated airflow entering at the pre-diffuser exit 226 and flowing around the cowl to the outer and inner flow paths.

Figures 4 to 7 each show the geometry of the walls in more detail than schematic Figure 3. Nevertheless, the same reference numerals are used, and for improved readability the reference numerals for the following elements common to all of Figures 4-7 are not re-produced on Figures 5-7: the outer casing 220, the inner casing 222, the upstream wall 224, the pre-diffuser exit 226, the fuel injector air inlet 214, the fuel injector arm 212, the fuel injector nozzle 216, the cowl 200, the outer combustor liner 232, the inner combustor liner 234, the head plate 238.

Figure 4 is an example of a cowl geometry which falls outside of the scope of the attached independent claim, and is shown for comparative purposes. Figure 4 shows a cowl 200 with a circular (e.g., semi-circular) profile in the radial plane. In this example, the upstream end (i.e., tip) of the cowl in the radial plane coincides with the local cowl axis (defined as above). The profile of the cowl in the radial plane is symmetric about the local cowl axis.

In each of Figures 5 to 7, the profile of the cowl 200 in the radial plane is non-symmetric with respect to the local cowl axis (i.e. a radial plane intersecting the central axis and at an angular location between adjacent fuel injectors) .

The inventors have found that adjusting the profile of the cowl away from a symmetric profile influences the flow dynamics in the combustion equipment, including the flow split, velocities and pressure losses along each of the outer and inner flow paths. As discussed above, combustion in the combustion chamber is conducted by introducing primary air from the outer and inner flow paths into the combustion chamber through ports in the outer and inner combustor liner. The amount of primary air entering the respective ports is related to the pressure profiles along the outer and inner flow paths, which drive flow into the combustion chamber. The use of a non-symmetric profile therefore enables the designer to adjust the flow split and pressure distribution in the combustor equipment to counteract sub-optimal flow patterns (e.g., too much flow entering via the inner liner as opposed to the outer liner). In particular, the cowl profile can be adjusted to alter (e.g., influence) a total pressure loss along paths through the combustion equipment, with consequent variation of flow rates of air entering the respective ports, as will be discussed further below. Static pressure may increase and decrease along a flow path as a flow velocity decreases and increases (respectively), as is reflected in Bernoulli's principle (for idealise isentropic flows), that is well understood in the art. Total pressure is the sum of dynamic and static pressure, and total pressure loss in a real flow (non-isentropic) is irreversible. Total pressure loss corresponds to entropy generation, for example resulting from the establishment of vortices (as will be discussed below) or relatively sharp turning angles for flow streamlines. The inventors have found that adjustments to the cowl profile can have a significant influence on total pressure loss in the combustion equipment, both as a whole and along respective paths through the combustion equipment.

Before discussing each of the example profiles of Figures 5-7, the discussion returns to the baseline profile of Figure 4 to discuss the flow dynamics associated with that geometry in more detail.

A flow of primary air is received from the compressor (e.g., from the last stage of a compressor outlet guide vane (OGV), and is directed into the combustion equipment by the pre-diffuser. End walls of the pre-diffuser (terminating at the pre-diffuser exit as shown in the drawings) permit boundary layer thickening in the pre-diffuser, which may influence a radial bias of the flow (e.g., radially outward or radially inward). Upon introduction into the combustion equipment, the flow develops into shear layers and splits into three regions: (i) the outer flow path; (ii) the inner flow path; and (iii) a flow path through the fuel injector air inlet. The flow may be approximately Mach 0.2-0.25 upon exiting the pre-diffuser, and turns upon introduction into the complex geometry of the combustion equipment to establish vortices.

In some geometries, such as the example of Figure 4, vortices may become established in outer and inner recirculation locations upstream of the cowl and radially outward/inward of the pre-diffuser exit, respectively (as indicated at locations 290, 292 in Figure 4). Such vortical flows may lead to irreversible total pressure loss, and may be particularly pronounced at the inner recirculation location, leading to significant pressure losses along the lower path. However, in other examples, a dominant vortex and associated pressure losses may become established at other locations.

The presence of the fuel injector arm in the outer flow path provides a local flow blockage which locally promotes a flow bias towards the lower flow path. This may result in a sub-optimal flow distribution into the combustion chamber from the respective flow paths.

The cowl profile of the cowl 500 of Figure 5 differs from the cowl profile of Figure 4. Firstly, the cowl profile is non-symmetric with respect to the local cowl axis in the respective radial plane (again, a radial plane intersecting the central axis and at an angular location between adjacent fuel injectors). The cowl profile deviates from the arcuate profile of Figure 4, with the upstream end (tip) of the profile being offset from the local cowl axis, in this example being disposed radially outward of the local cowl axis. The tip point is shown in each of Figures 4-7 by a small circle located on the cowl profile.

The feature of the upstream end (tip point) of the cowl profile being offset from the local cowl axis may be defined as follows, with reference to the local cowl axis; local height, the location of the fuel injector air inlet; and/or a radial location.

In the radial plane, the cowl profile has a local height along a direction normal to the local cowl axis, with the local height varying along the local cowl axis from the tip to the base (increasing from a minimum at a tip point).

The fuel injector air inlets of the plurality of fuel injectors each have a centre at a radial location with respect to the central axis, defined as an air inlet radial location.

The non-symmetrical location of the tip of the cowl profile may be defined by specifying that the tip point of the cowl profile is offset from the air inlet radial location by a radial offset with respect to the central axis. The offset may be greater than 10% of the maximum local height of the cowl profile (which in this example corresponds to the local height at the base of the cowl profile.

In the above definition, the tip point of the cowl profile is defined as the location which has the lowest local height (i.e. along a direction normal to the local cowl axis). For a curved cowl profile, the local height reduces to zero at the point which is farthest along the local cowl axis, and so the tip point may otherwise be defined as the point which is most distal along the cowl axis (i.e. farthest from the base of the cowl where it is adjacent the head plate).

An alternative definition of the tip point is with respect to the local radius of curvature. In particular, the example cowl profiles in Figures 5 to 7 each have a variable radius of curvature. The minimum radius of curvature in these examples corresponds to the upstream tip of the cowl profile. In some examples, there may not be a singular minimum (e.g., the tip may be defined by an arc of constant curvature), and so the tip region may be the locus of points of common minimum radius of curvature. With this curvature-based definition, the point of minimum radius of curvature or the locus of points of minimum radius of curvature is offset from the air inlet radial location by a radial offset (with respect to the central axis) by an amount which is greater than 10% of the maximum radial separation (with respect to the central axis) between points on the cowl profile. This definition has no reference to the local cowl axis for the assessment of the separation of the tip location.

The non-symmetrical feature of the tip location may be defined, additionally or alternatively, based on an angular frame of reference. The angular frame of reference is defined based on an origin where the local cowl axis meets the head plate, and the local cowl axis extends from the origin (upstream) at an angle of 0°. The tip point of the cowl profile, as defined by reference to the local height of the cowl profile or by reference to the minimum radius of curvature (or locus of minimums) is angularly offset from the local cowl axis, for example by an angular offset 502 at least 5°, such as at least 10° or at least 15°. The offset may be in either direction (i.e., it relates to a magnitude of the angular offset).

In the example of Figure 5, the cowl profile is biased radially outwardly to permit an inner portion (radially inwardly of the tip) to expand relative to the profile of Figure 4, and adopt a profile which conforms to (e.g., mirrors or corresponds to) an opposing profile of the upstream wall 224 of the combustion equipment. By biasing the cowl profile radially outwardly, radially inward profile of the cowl profile can be configured to conform to the opposing profile of the upstream wall 224 to provide an S-shaped inner flow path around the cowl, with a relatively smoother streamline profile between the cowl, upstream wall 224, and the inner recirculation location (which may suppress a vortex at the inner recirculation location), thereby resulting in a relatively lower total pressure loss along the inner flow path. For example, when comparing the angular inclination of the cowl profile and the lower portion of the upstream wall 224 across a shortest distance of separation (i.e. two closest points along the respective walls), an offset between the two angular inclinations may be generally lower in the modified profile of Figure 5, as compared with the precursor geometry of Figure 4. The opposing walls may be considered to be more parallel to each other. While Figure 5 shows profiles of these walls schematically, with the radially-inward part of the cowl profile having a relatively flat forward profile and a convex aft profile (towards the base), other geometries are possible and can be adopted, for example for conform with the profile of the upstream wall 224. For example, the radially-inward part of the cowl profile may have a convex or concave shape, or an inflected geometry (with an inflection point between a concave and convex portion). This may permit better guiding of the flow to the lower flow path and weaken or prevent formation of the vortex at the recirculation region described above, both of which influence total pressure loss.

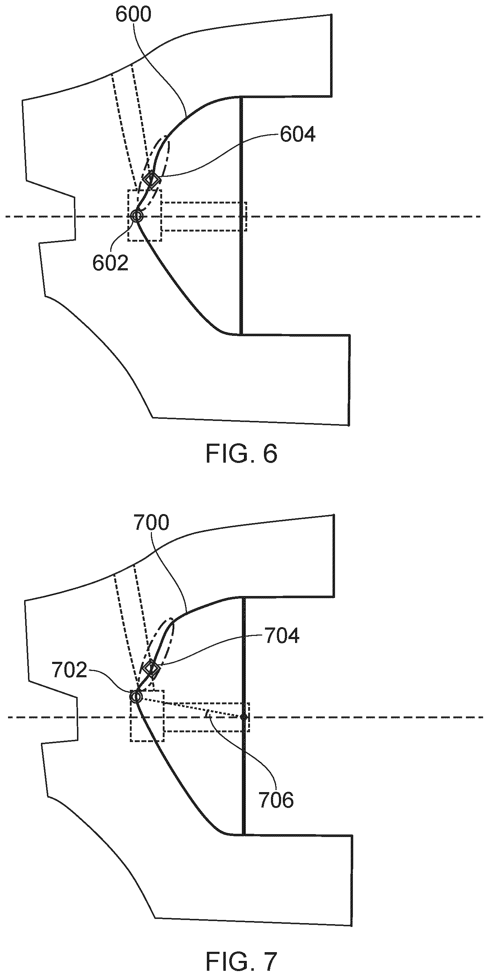

Figure 6 shows a further example non-symmetric cowl profile 600. In this example, the tip point (as indicated by the small circle at location 602) is coincident with the local cowl axis. However, the cowl profile differs either side of the local cowl axis, with an outer portion of the cowl profile (at a radially-outer location relative to the local cowl axis) being defined to incorporate a point of inflection., as indicated at with the rhombus shaped marker at 604. The point of inflection occurs where there is a change from a convex profile to a concave profile. A dashed oval highlights an S-curve region with convex and concave curves meeting at the inflection point 604.

Figure 6 shows an example in which the cowl profile is defined by two curved halves meeting at the tip point (which may be defined using any of the definitions given above), and in which just one of the halves has a point of inflection (i.e. the upper part shown in this figure). In some examples, both halves may have a point of inflection and still be non-symmetrical about the local cowl axis. The expression "halves" is used without requiring mathematically equal curve lengths, nor requiring that they meet on the local cowl axis. It is used to indicate the curves either side of the tip.

The curves may be otherwise characterized by use of geometrical definitions for curve types. In particular, one of the curved halves may comprise an ogee profile, whereas the other may comprise an ogive profile. On ogee profile includes both concave and convex segments in a continuous curve, for example an S-shaped double curve. An ogive profile may be a secant ogive, which relates to a profile for a curve formed by the arc of a circle, wherein the base of the shape (or in this case the axis intersecting the tip) is not on the radius of the circle define by the ogive radius. Examples of typical secant ogive profiles include the tip profile of a bullet or rocket.

Figure 7 shows an example having a cowl profile 700 similar to the cowl profile of Figure 6, with a point of inflection 704 on the outer curved half, but in which the tip point 702 is offset from the local cowl axis as described above. Figure 7 also illustrates the angular offset 706 by which the tip point is offset from the local cowl axis. The angular offset may be as described above with respect to Figure 5.

In the examples of Figures 6 and 7, the respective cowl profiles include an S-shape profile around the injector arm which assists turning of the outer portion of the flow around the injector arm, in particular by locally reducing the profile of the cowl at a radial location where the injector arm provides a blockage to flow. The example of Figure 7 may be considered to be a blend of the examples of Figures 5 and 6, achieving a corresponding blend of advantages.

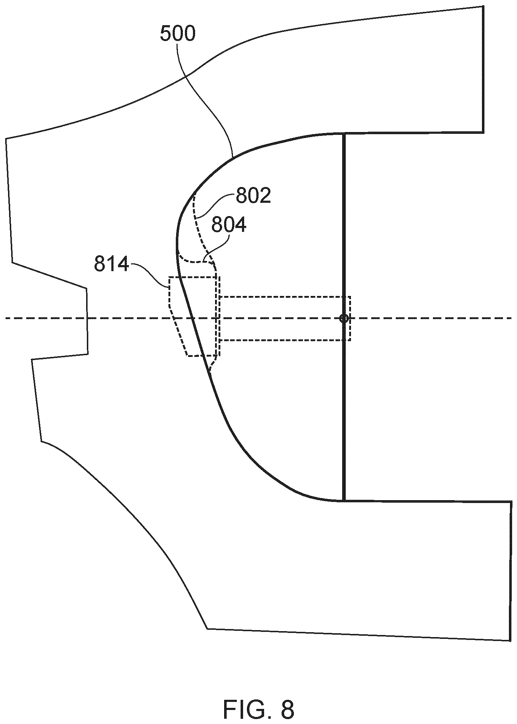

As Figures 4-7 show radial planes at angular locations between the fuel injector arms, the show the profile of the annular cowl away from the fuel injector and free of any accommodations for the fuel injector. However, the profile of the cowl may locally vary proximate to the fuel injector, particularly to permit the fuel injector air inlet to extend through the upstream end of the cowl. Figure 8 corresponds to the example of Figure 5 and shows the general cowl profile 500 of that example, and additionally shows several cross-sectional profiles of a recess of the cowl for accommodating the fuel injector, including a profile 802 for a portion of the recess corresponding to the fuel injector arm (not shown for clarity), and a profile 804 angularly offset from the immediate location of the fuel injector arm but still corresponding to the recess.

The recess may permit the cowl to locally accommodate and smoothly guide flow towards the fuel injector air inlet.

Figure 8 also shows a further example of a fuel injector air inlet 814, which differs from the examples of Figures 4 to 7 in that the wall defining the respective air inlet 814 is non-symmetrically tapered to bias flow around the wall towards a radially inward direction. In other examples, an alternative flow bias may be desired, and a non-symmetrical taper to bias flow towards a radially outward direction may be provided. As shown in Figure 8, the non-symmetrical taper is formed by truncating the wall defining the fuel injector air inlet along a plane that is inclined with respect to the air inlet axis, and also inclined to a normal of the air inlet axis.

In each of the examples described above with respect to Figures 5-7, the cowl is non-symmetric with respect to the local cowl axis. The non-symmetry of the cowl may be over a tip portion of the cowl profile, as opposed to at a region proximal to the base of the cowl (i.e., adjacent to the head plate). For example, the tip portion of the cowl profile may be defined by reference to a local height of the cowl profile along the cowl axis. For example, the tip portion may be a region extending from the tip to an axial location (along the local cowl axis) corresponding to no more than 50% (e.g. 50%) of a maximum height of the cowl profile. The local height may be defined as the separation between outer and inner portions of the cowl profile along a direction normal to the local cowl axis, the local height therefore varying along the local cowl axis from the tip (where it is effectively zero for a curved tip) to the base.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It will also be appreciated that whilst the invention has been described with reference to aircraft and aircraft propulsion systems, the methodologies described herein could be used for many other applications. These include, but are not limited to, land-based and marine-based gas turbines, and space-based applications. If so, the systems and methods described herein may be used in conjunction with, or as part of, a spacecraft.

Referring to Figure 5, the present disclosure includes combustion equipment 16 for a gas turbine engine 1, including a head plate and an annular cowl 500 which has a local cowl axis and is positioned upstream of the head plate 328. In a longitudinal plane which includes a central axis of the combustion equipment and which lies at an azimuthal location with respect to the central axis between adjacent fuel injectors of the combustion equipment 16, the annular cowl has a profile which extends along the local cowl axis and is non-symmetric with respect to the local cowl axis.

## Claims

1. Combustion equipment for a gas turbine engine, comprising:
an annular combustion chamber having a head plate at an upstream end, wherein the combustion chamber is annular around a central axis;
a plurality of fuel injectors angularly distributed around the combustion chamber, each fuel injector having a respective air inlet defining an air inlet axis;
an annular cowl positioned upstream of the head plate, the annular cowl extending from a downstream base proximal to the head plate to an upstream tip;
wherein, in a radial plane intersecting the central axis and at an angular location between adjacent fuel injectors, the annular cowl has a cowl profile which extends along a local cowl axis from the base towards the tip;
wherein the local cowl axis is:
normal to a midpoint on the head plate in the radial plane, or
coincident with an angular projection of an air inlet axis of an adjacent fuel injector to the radial plane; and
wherein the cowl profile in the radial plane is non-symmetric with respect to the local cowl axis.

2. Combustion equipment for a gas turbine engine according to Claim 1, wherein in the radial plane the cowl profile has a local height along a direction normal to the local cowl axis, wherein the local height varies along the local cowl axis from the tip to the base, increasing from a minimum at a tip point;
wherein a tip portion of the cowl profile extends from the tip point to an axial location corresponding to 50% of a maximum local height of the cowl profile; and
wherein the cowl profile in the radial plane is non-symmetric with respect to the local cowl axis within the tip region.

3. Combustion equipment according to Claim 1 or Claim 2, wherein in the radial plane the cowl profile has a local height along a direction normal to the local cowl axis, wherein the local height varies along the local cowl axis from the tip to the base, increasing from a minimum at a tip point;
wherein the air inlets of the plurality of fuel injectors each have a centre at a radial location with respect to the central axis, defined as an air inlet radial location; and
wherein the tip point is offset from the air inlet radial location by a radial offset with respect to the central axis which is greater than 10% of the maximum local height of the cowl profile.

4. Combustion equipment according to any one of Claims 1 to 3, wherein the air inlets of the plurality of fuel injectors each have a centre at a radial location with respect to the central axis, defined as an air inlet radial location;
wherein in the radial plane the cowl profile has a non-uniform radius of curvature, and wherein a point of minimum radius of curvature or a locus of points of common minimum radius of curvature is offset from the air inlet radial location by a radial offset with respect to the central axis which is greater than 10% of a maximum radial separation between points on the cowl profile.

5. Combustion equipment according to any one of Claims 1 to 4, wherein in the radial plane, the local cowl axis intersects the head plate at an origin;
wherein in the radial plane the cowl profile has a non-uniform radius of curvature, and includes a point of minimum curvature or a locus of points of common minimum curvature;
wherein in a polar frame of reference about the origin and in which the local cowl axis extends from the origin at an angle of 0°
the point of minimum curvature or locus of points of common minimum curvature are angularly offset from the local cowl axis by at least 15°.

6. Combustion equipment according to any one of Claims 1 to 5, wherein in the radial plane the cowl profile is defined by two curved halves that meet towards the tip;
wherein a first of the curved halves has a point of inflection.

7. Combustion equipment according to Claim 6, wherein a second of the curved halves has no point of inflection.

8. Combustion equipment according to any one of Claims 1 to 7, wherein in the radial plane the cowl profile is defined by two curved halves that meet towards the tip; including a curved half with an ogee profile and a curved half with an ogive profile.

9. Combustion equipment according to any one of Claims 1 to 8, wherein for each fuel injector:
the cowl comprises a recess projecting inwardly towards the head plate, wherein the respective fuel injector extends through the recess and has a supporting fuel injector arm extending radially inwardly towards the recess so as to protrude upstream of the cowl within the recess at a radial location radially outward of the respective air inlet, defined as an embedded arm radial location;
wherein in the radial plane, the cowl profile is generally convex and has concave region at a radial location corresponding to the embedded arm radial location;
wherein the radial plane is at an angular location between adjacent recesses of the cowl.

10. Combustion equipment according to Claim 9, wherein in the radial plane, the cowl profile has a point of inflection at a radial location corresponding to the embedded arm radial location.

11. Combustion equipment according to any one of Claims 1 to 10, wherein for each of the fuel injectors, a wall defining the respective air inlet is non-symmetrically tapered to bias flow around the wall towards a radially inward direction, or towards a radially outward direction.

12. Combustion equipment according to any one of Claims 1 to 11, wherein the non-symmetrical taper is defined by a truncation of the wall along a plane that is inclined with respect to the air inlet axis and a normal of the air inlet axis.
